(19) Europäisches Patentamt
European Patent Office
Office européen des brevets

(11) EP 2 065 960 A1

(12) **EUROPEAN PATENT APPLICATION**
published in accordance with Art. 153(4) EPC

(43) Date of publication:
**03.06.2009 Bulletin 2009/23**

(21) Application number: **07807182.6**

(22) Date of filing: **06.09.2007**

(51) Int Cl.:
**H01M 8/04** *(2006.01)*   **H01M 8/10** *(2006.01)*

(86) International application number:
**PCT/JP2007/067775**

(87) International publication number:
**WO 2008/029954 (13.03.2008 Gazette 2008/11)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.09.2006 JP 2006243130**

(71) Applicant: **Sumitomo Chemical Company, Limited Tokyo 104-8260 (JP)**

(72) Inventors:
• **ISHITOBI, Masamitsu**
  **Tsukuba-shi, Ibaraki 305-0045 (JP)**
• **NAKAZONO, Akiko**
  **Tsukuba-shi, Ibaraki 305-0047 (JP)**
• **SAITO, Shin**
  **Tsukuba-shi, Ibaraki 305-0005 (JP)**

(74) Representative: **Henkel, Feiler & Hänzel Patentanwälte Maximiliansplatz 21 80333 München (DE)**

(54) **METHOD FOR EVALUATING DURABILITY OF UNIT CELL, DEVICE FOR EVALUATING DURABILITY, PROGRAM FOR EVALUATING DURABILITY, AND UNIT CELL OF FUEL CELL**

(57)    The present invention provides a unit cell durability evaluation method for evaluating a unit cell of a fuel cell including a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, in a information-processing equipment, and the method involves a reception step (S01), a model production step (S02, S03), a water distribution calculation step (S04), a strain/stress calculation step (S05), an equivalent stress calculation step (S06), an evaluation value lead-out step (S07, S08), and an output step (S09).

Fig.6

EP 2 065 960 A1

**Description**

TECHNICAL FIELD

The present invention relates to a durability evaluation method, durability evaluation equipment, and a durability evaluation program for evaluating durability of a unit cell of a fuel cell and to a unit cell of a fuel cell as well.

BACKGROUND ART

A polymer electrolyte fuel cell as a clean, next-generation fuel cell for power generation, producing only water as a byproduct by electrochemical reaction of a fuel gas containing hydrogen and an oxidant gas containing oxygen such as air, has been actively investigated and developed. With respect to this polymer electrolyte fuel cell, there are proposed three kinds of structures; a cylindrical type, a monolith type, and a flat type. Among these structures, flat type cells are often employed for low temperature operation type polymer electrolyte fuel cells.

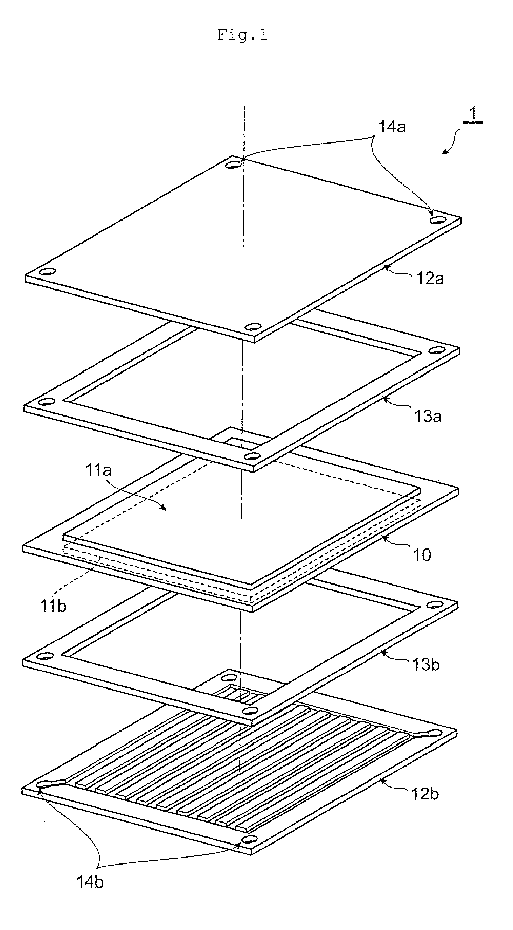

Herein, Fig. 1 shows a configuration of a unit cell of a common flat type polymer electrolyte fuel cell. A unit cell 1 of the polymer type fuel cell includes a proton conductive polymer electrolyte membrane 10 and is composed by installing plate-like electrodes 11a and 11b, plate-like conductive separators 12a and 12b, and circular gas seal components 13a and 13b on both sides of the polymer electrolyte membrane 10 while sandwiching the membrane 10.

In such a polymer electrolyte fuel cell, at the time of cell operation, particularly at the time of repeating operation and pause for a long time, the polymer electrolyte membrane 10 absorbs by-produced water and is expanded upon fuel cell operation, and dried and shrunk upon pause and thus, stress (hereinafter, called as water absorption stress) is generated along with the expansion and shrinkage. This stress affects on the joining parts of the electrodes 11a and 11b to the polymer electrolyte membrane 10. The mechanical deterioration caused by the stress is supposed to cause damages of the polymer electrolyte membrane 10 (see, for example, Japanese Patent Application Laid-Open (JP-A) No. 8-259710).

To avoid the above-mentioned possible mechanical deterioration, for example, JP-A No. 2000-215903 proposes a method for processing a polymer electrolyte membrane to have characteristics different between the center part and the outer circumferential part. Further, in JP-A No. 2005-108777, a method for altering the rib shape of a gas channel is proposed. Furthermore, JP-A No. 2003-68318 proposes a method for installing a reinforcing material having elasticity in the outer circumferential parts of electrodes.

DISCLOSURE OF THE INVENTION

However, the above-mentioned conventional techniques all have a problem that the production cost is consequently increased because of increase in the number of production steps and the number of parts. Further, such a technique of improving parts composing a fuel cell in order to enhance the durability of the fuel cell involves actually producing unit cells of a fuel cell experimentally and carrying out experiments for a long time to determine the durability and thus, immense trial and error are required. Therefore, with respect to the configuration of a fuel cell, a method for evaluating durability has been desired. However, methods for evaluating durability while estimating the above-mentioned stress to which the polymer electrolyte membrane is subjected along with operation and pause of the fuel cell, particularly water absorption stress, has scarcely been investigated.

The present invention has been made to solve the above-mentioned problems and aims to provide a unit cell durability evaluation method, a durability evaluation equipment, and a durability evaluation program for easily evaluating durability of a unit cell of a fuel cell. Further, the present invention aims to provide a unit cell for a fuel cell having high durability by keeping the evaluation value calculated by the durability evaluation method in a specified range.

In order to achieve the objects, the unit cell durability evaluation method of the present invention is a durability evaluation method for evaluating a unit cell for a fuel cell including a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, in a information-processing equipment, wherein the method includes: a reception step of receiving an input of parameters of the unit cell; a model production step of producing a finite element model of the unit cell divided into a plurality of elements based on the parameters received in the reception step; a water distribution calculation step of calculating the water distribution of the polymer electrolyte membrane in the finite element model produced in the model production step based on boundary conditions of the water distribution contained in the parameters received in the reception step by a finite element method; a strain/stress calculation step of calculating strains and stresses of the respective elements of the polymer electrolyte membrane from the water distribution calculated in the water distribution calculation step and a water absorption linear expansion coefficient and a modulus of elasticity of the polymer electrolyte membrane contained in the parameters received in the reception step by a finite element method; an equivalent stress calculation step of calculating equivalent stresses of the respective elements from stresses of the respective elements calculated in the strain/stress calculation step; an evaluation value lead-out step of leading out an evaluation value for evaluating durability of the unit cell from the equivalent stresses of the respective elements calculated in the equivalent stress calculation step; and an output step of outputting the evaluation value led out in the evaluation value lead-out step.

The durability evaluation method of a unit cell of the present invention involves producing a finite element model relevant to the unit cell, which is a subject to be evaluated from the input data. The durability evaluation method is carried out by calculating the water distribution in the produced finite element model and calculating the equivalent stress generated in the polymer electrolyte membrane based on the water distribution. In the durability evaluation method, the evaluation value is led out from the calculated equivalent stresses. That is, according to the durability evaluation method of a unit cell of the present invention, the stress corresponding to the water distribution of a unit cell, that is, the durability of a unit cell of a fuel cell can be evaluated in consideration of the water absorption stress. Further, according to the durability evaluation method of a unit cell of the present invention, evaluation can be carried out in a information-processing equipment and there is no need to actually produce a unit cell for evaluation and therefore, the durability of a unit cell can easily be evaluated.

Further, the inventors of the present invention have made various investigations and have found that in a non-efficacious power generation region, the durability of a unit cell can be evaluated based on the range in which a stress at a prescribed level or higher is generated, and in the above-mentioned evaluation method the inventors have developed evaluation values for properly evaluating durability of a unit cell. That is, it is desirable that, in the evaluation value lead-out step, an average value $S_{av}$ of the equivalent stresses of the elements in an efficacious power generation region relevant to an electric reaction in the polymer electrolyte membrane among the elements for which the equivalent stresses are calculated in the equivalent stress calculation step is led out; the elements of a non-efficacious power generation region other than the efficacious power generation region of the polymer electrolyte membrane in which the equivalent stress is $c \times S_{av}$ or higher in relation to a set coefficient c of 1 or higher are extracted; and the evaluation value is led out from a calculation expression previously set from the value of a total volume $V_z$ of the extracted elements. More specifically, in the evaluation value lead-out step, $\alpha$ led out from the Expression 1 and $\beta$ led out from the Expression 2 from the total volume $V_z$, a volume V0 of the polymer electrolyte membrane, a volume $V_y$ of the efficacious power generation region of the polymer electrolyte membrane, and a thickness d of the polymer electrolyte membrane:

$$\alpha = \left( \sqrt{\frac{V_y}{d} + \frac{V_z}{d}} - \sqrt{\frac{V_y}{d}} \right) \times \left( \sqrt{\frac{V0}{d}} - \sqrt{\frac{V_y}{d}} \right) \qquad \text{(Expression 1)}$$

$$\beta = \left( \sqrt{\frac{V_y}{d} + \frac{V_z}{d}} - \sqrt{\frac{V_y}{d}} \right) \times \left( \sqrt{\frac{V0}{d}} - \sqrt{\frac{V_y}{d}} \right) \times \frac{d}{V0} \qquad \text{(Expression 2)}$$

are regarded as the evaluation value.

The coefficient c is desirable to be 1.2. According to this configuration, it is made possible to evaluate the durability more properly. The above-mentioned numeric value is a value obtained experientially by the inventors of the present invention.

In the model production step, it is desirable to produce the finite element model having nodes in the gas channels formed in the separators. With this configuration, since the strain of an element of the polymer electrolyte membrane contacting the grooves can precisely be calculated and thus a more precise durability evaluation can be made possible.

In the equivalent stress calculation step, it is desirable to calculate the equivalent stress by using an expression of von Mises equivalent stress. With this configuration, the durability can easily be evaluated.

It is desirable that the unit cell durability evaluation method further includes a convergence determination step of determining whether the evaluation value led out in the evaluation value lead-out step is converged or not and if it is determined converged, outputting the evaluation value in the output step, and if it is determined not converged, changing the number of the nodes of the elements of the finite element model of the unit cell, again producing the finite element model, and leading out the evaluation value. With this configuration, since the calculation for evaluation can be done with a proper value of the node number of the finite element model of the unit cell, a further proper durability evaluation is made possible.

It is desirable that the unit cell durability evaluation method further includes a condition determination step of determining whether the evaluation value led out in the evaluation value lead-out step satisfies a previously set finishing condition or not, and if it is determined satisfied, outputting the evaluation value in the output step, and if it is determined not satisfied, again producing the finite element model based on parameters different from the parameters relevant to leading-out of the evaluation value and leading out the evaluation value. With this configuration, since the parameters of the unit cell having prescribed durability can be known, they help to design the unit cell.

The present invention can be described as an invention of the durability evaluation method for a unit cell as described above and besides, the present invention can be described as an invention of a durability evaluation equipment and a durability evaluation program for a unit cell as follows. They are substantially a single invention although the category or the like differs and bring about the same functions and effects.

That is, the durability evaluation equipment for a unit cell according to the present invention is an equipment for evaluating the durability of a unit cell for a fuel cell including a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein the apparatus includes: reception means for receiving an input of parameters of the unit cell; model production means for producing a finite element model of the unit cell divided into a plurality of elements based on the parameters received by the reception means; water distribution calculation means for calculating the water distribution of the polymer electrolyte membrane in the finite element model produced by the model production means based on boundary conditions of the water distribution contained in the parameters received by the reception means by a finite element method; strain/stress calculation means for calculating strains and stresses of the respective elements of the polymer electrolyte membrane from the water distribution calculated by the water distribution calculation means and a water absorption linear expansion coefficient and a modulus of elasticity of the polymer electrolyte membrane contained in the parameters received by the reception means based on a finite element method; equivalent stress calculation means for calculating equivalent stresses of the respective elements from stresses of the respective elements calculated by the strain/stress calculation means; evaluation value lead-out means for leading out an evaluation value for evaluating durability of the unit cell from the equivalent stresses of the respective elements calculated by the equivalent stress calculation means; and output means for outputting the evaluation value led out by the evaluation value lead-out means.

In addition, there is provided a unit cell durability evaluation program for making a information-processing equipment evaluate the durability of a unit cell for a fuel cell including a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein the program makes the information-processing equipment execute the following processings: a reception processing of receiving an input of parameters of the unit cell; a model production processing of producing a finite element model of the unit cell divided into a plurality of elements based on the parameters received in the reception processing; a water distribution calculation processing of calculating the water distribution of the polymer electrolyte membrane in the finite element model produced in the model production processing based on boundary conditions of the water distribution contained in the parameters received in the reception processing by a finite element method; a strain/stress calculation processing of calculating strains and stresses of the respective elements of the polymer electrolyte membrane from the water distribution calculated in the water distribution calculation processing and a water absorption linear expansion coefficient and a modulus of elasticity of the polymer electrolyte membrane contained in the parameters received in the reception processing by a finite element method; an equivalent stress calculation processing of calculating equivalent stresses of the respective elements from stresses of the respective elements calculated in the strain/stress calculation processing; an evaluation value lead-out processing of leading out an evaluation value for evaluating durability of the unit cell from the equivalent stresses of the respective elements calculated in the equivalent stress calculation processing; and an output processing of outputting the evaluation value led out in the evaluation value lead-out processing.

The unit cell for a fuel cell according to the present invention is a unit cell for a fuel cell including a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein, as the evaluation value by the above-mentioned unit cell durability evaluation method wherein the coefficient c is 1.2, $\alpha$ is in a range of from 0 [mm$^2$] or higher to 50.0 [mm$^2$] or lower and $\beta$ is in a range of from 0 or higher to 0.01 or lower. Since mechanical deterioration of the above-mentioned unit cell due to the water absorption stress can remarkably be suppressed, the unit cell can be highly durable.

According to the present invention, the durability of a unit cell of a fuel cell can be evaluated in consideration of the stress corresponding to the water distribution in a polymer electrolyte membrane, that is, the water absorption stress. Further, according to the present invention, evaluation can be carried out in information-processing equipment and there is no need to actually produce a unit cell for evaluation and therefore, the durability of a unit cell can easily be evaluated. Furthermore, according to the present invention, a unit cell of a fuel cell having high durability can be provided.

BRIEF DESCRIPTION OF THE DRAWINGS

Fig. 1 is a schematic configuration diagram of a unit cell of a flat type polymer electrolyte fuel cell, which is a subject to be evaluated, by a durability evaluation method of a unit cell according to an embodiment of the present invention.

Fig. 2 is a drawing showing faces of separators contacting electrodes of a unit cell.

Fig. 3 is a drawing showing the main face of a polymer electrolyte membrane of a unit cell.

Fig. 4 is a configuration diagram of a durability evaluation equipment for a unit cell according to an embodiment of the present invention.

Fig. 5 is a drawing showing a setting example of nodes and elements in a finite element model.

Fig. 6 is a flow chart showing a durability evaluation method of a unit cell according to an embodiment of the present invention.

Fig. 7 is a flow chart showing a durability evaluation method of a unit cell according to an embodiment of the present invention.

Fig. 8 is a flow chart showing a durability evaluation method of a unit cell according to an embodiment of the present invention.

Fig. 9 is a diagram showing a configuration of a durability evaluation program for a unit cell according to the present invention.

Fig. 10 is a cross-sectional view of a unit cell used in examples.

Fig. 11 is a graph of the calculated stress of a polymer electrolyte membrane.

Fig. 12 is a graph of the calculated stress of a polymer electrolyte membrane.

DESCRIPTION OF THE REFERENCE NUMERALS

1. Unit cell; 10. Polymer electrolyte membrane; 11. Electrode; 12. Separator; 13. Gas seal component; 14. Manifold; 21. Gas channel; 30. Durability evaluation equipment for unit cell; 31. Reception part; 32. Model production part; 33. Water distribution calculation part; 34. Strain/stress calculation part; 35. Equivalent stress calculation part; 36. Evaluation value lead-out part; 37. Output part; 38. Determination part; 40. Input apparatus; 50. Recording medium; 50a. Program storage region; 51. Durability evaluation program; 51a. Main module; 51b. Receiving module; 51c. Model production module; 51d. Water distribution calculation module; 51e. Strain/stress calculation module; 51f. Equivalent stress calculation module; 51g. Evaluation value lead-out module; and 51h. Output module.

BEST MODES FOR CARRYING OUT THE INVENTION

Hereinafter, the durability evaluation method, the durability evaluation system, and the durability evaluation program for a unit cell of the present invention will be described with reference to drawings. In the description of the drawings, same reference numerals are assigned for same elements and duplicate description is omitted.

First, a unit cell to be a subject for evaluation of the durability evaluation method of this embodiment will be described. The durability evaluation method according to this embodiment is a method in a information-processing equipment, and there is no need to actually use a unit cell. Fig. 1 shows a configuration of a unit cell 1 of a flat type polymer electrolyte fuel cell, which is a subject of the evaluation method according to this embodiment. As described above, the unit cell 1 includes a polymer electrolyte membrane 10, electrodes 11a and 11b, conductive separators 12a and 12b, and circular gas seal components 13a and 13b.

The polymer electrolyte membrane 10 contains a polymer having an ion-exchange group as a main component. Examples of such a polymer having an ion-exchange group include sulfonic acid group-containing fluorocarbon polymers, for example, Nafion (registered trade name, manufactured by Dupont) and polymers obtained by introducing a sulfonic acid group into aromatic polymers with excellent heat resistance. Such a polymer has, in general, an ion exchange capacity of 0.2 to 4 meq/g.

One of the electrodes 11a and 11b is a fuel electrode (anode) and the other is an air electrode (cathode). The electrodes 11a and 11b are generally formed by layering a gas diffusion layer and a catalytic reaction layer. The catalytic reaction layer is formed on the main face of the polymer electrolyte membrane 10 while being tightly stuck to the main face. As the gas diffusion layer, a porous carbon nonwoven fabric, carbon paper or the like is employed. The catalytic reaction layer is generally a layer containing a catalytic component such as platinum fine particles supported on granular or fibrous carbon such as active carbon or graphite and also a polymer electrolyte as main components.

A previously integrated combination of the polymer electrolyte membrane 10 and the pair of electrodes 11a and 11b sandwiching the membrane is generally called as MEGA. The circular gas seal components 13a and 13b are installed in the surrounding of the MEGA and seal the MEGA so as to prevent leakage of a fuel gas and an oxidant gas supplied after cell assembly or to prevent mixing of two types of gases with each other. The circular gas seal components 13a and 13b are generally rubber elastic bodies and contain silicon rubber, fluororesin rubber or the like.

Further, on both faces of the MEGA, the separators 12a and 12b having conductivity are arranged to mechanically fix the MEGA and electrically connect neighboring MEGAs in series. In the parts of the conductive separators 12a and 12b having contact with the MEGA, groove-like gas channels for supplying a fuel gas and an oxidant gas to the electrode faces and carrying off the produced gas and excess gas are formed. The gas channels may be formed as separate parts from the conductive separators 12a and 12b; however, it is common that the surfaces of the conductive separators 12a and 12b are cut or press-processed according to their material to form grooves and ribs in the surfaces of the conductive separators 12a and 12b and use them as gas channels. In the separators 12a and 12b, manifolds 14a and 14b are formed for supplying gases to the grooves formed in the separators and discharging the gases. Further, through holes for fastening with bolts may sometimes be formed in the separators 12a and 12b and the gas seal components 13a and 13b to sandwich the MEGA. The separators 12a and 12b are obtained by forming a conductive material such as a carbon material or a metal material.

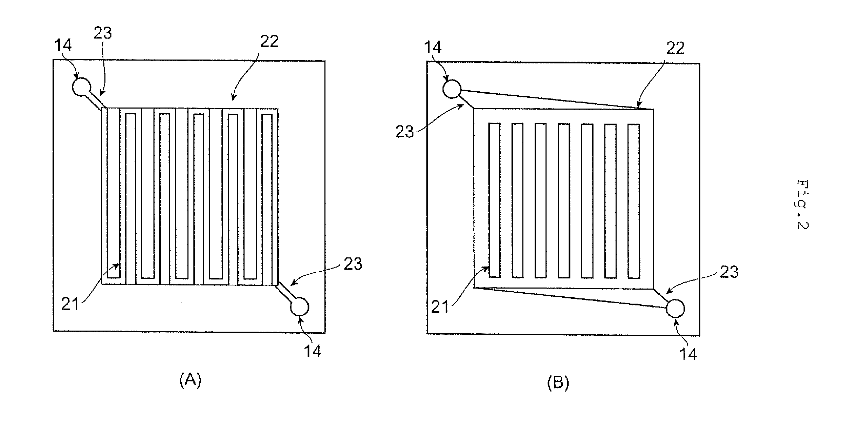

Fig. 2 shows faces of the separators 12a and 12b contacting the electrodes 11a and 11b. Fig. 2(A) shows a type of a meandering gas channel 21. Fig. 2(B) shows a type of gas channels 21 extending in parallel. In Fig. 2, the part of the gas channel 21 surrounded with an outer circumferential rim 22 has contact with the electrodes 11a and 11b and in this part, a fuel gas or an oxidant gas is supplied. Further, grooves 23 are formed from the manifolds 14 for supplying a gas in the part of the gas channel 21 surrounded with the outer circumferential rim 22.

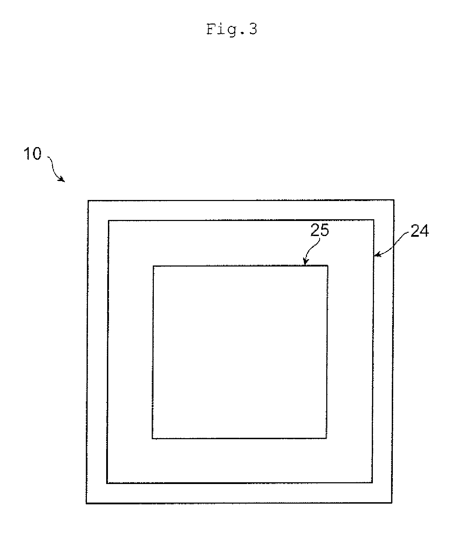

According to the present invention, in the polymer electrolyte membrane 10 where water absorption stress is mainly generated among the constituent elements of the unit cell 1 of the flat type fuel cell, an efficacious power generation region relevant to an electric reaction and a non-efficacious power generation region other than the efficacious power generation region are defined. Fig. 3 shows the main face of the polymer electrolyte membrane 10. In the polymer electrolyte membrane 10, the part surrounded with an outer circumferential rim 24 is a region having contact with the electrode 11. This part is defined as the efficacious power generation region. Further, in the polymer electrolyte membrane 10, the part in the outside of the part surrounded with the outer circumferential rim 24 is a region having no contact with the electrode 11 and this region is defined as the non-efficacious power generation region. With respect to a common flat type fuel cell, regions in the faces of the polymer electrolyte membrane 10 with which the two electrodes 11a and 11b are brought into contact are respectively regions similar to the above-mentioned regions. However, in the case the regions are not similar to the above-mentioned regions, the region with which the air electrode is brought into contact is used preferentially. In addition, the part surrounded with an outer circumferential rim 25 in the inside of the efficacious power generation region is a region projecting the above-mentioned part surrounded with the gas flow channel 21.

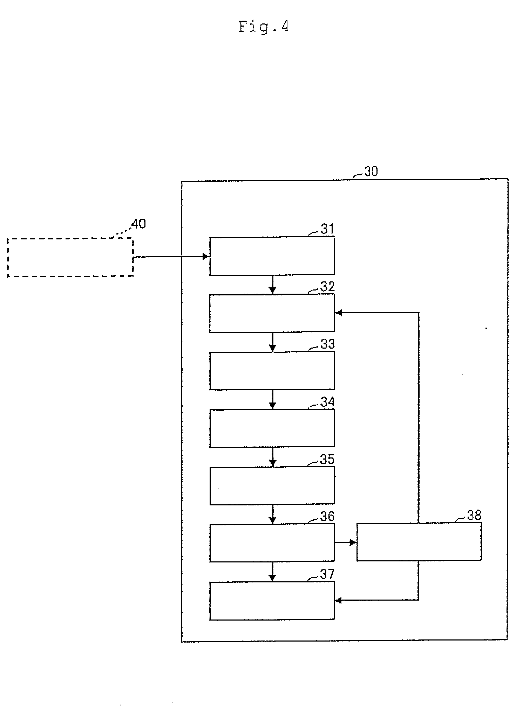

Next, a durability evaluation equipment for the fuel cell 1 according to this embodiment will be described. Fig. 4 shows a durability evaluation equipment 30 for the fuel cell 1 according to this embodiment. Evaluation of the durability of the fuel cell 1 is carried out by executing the durability evaluation method of the fuel cell 1 by the durability evaluation equipment 30. The durability evaluation equipment 30, that is, a information-processing equipment is practically a workstation or a PC (Personal Computer). The durability evaluation equipment 30 is composed of, for example, hardware such as a CPU (Central Processing Unit) and memories, and functions of the durability evaluation equipment 30 described later are fulfilled by operation of these constituent elements by a program or the like.

In the present invention, production of a finite element model of the fuel cell 1 and calculation by a finite element method have to be carried out. In this embodiment, existing methods and programs may be used for the execution. For example, to produce the finite element model, SDRC/FEMAP, a general-purpose finite element production software program can be employed. Further, the calculation by a finite element method can be carried out using NE/Nastran Version 7.0 (manufactured by Noran Engineering Inc.) can be employed.

As shown in Fig. 4, the durability evaluation equipment 30 for the unit cell 1 includes a reception part 31, a model production part 32, a water distribution calculation part 33, a strain/stress calculation part 34, an equivalent stress calculation part 35, an evaluation value lead-out part 36, an output part 37, and a determination part 38. Further, the durability evaluation equipment 30 is connected with an input apparatus 40 to input data from the input apparatus 40.

The reception part 31 is reception means for receiving inputs of parameters relevant to the unit cell 1. Input of parameters is carried out by the input apparatus 40. However, input of parameters needs not be carried out by an outside apparatus and data stored previously in the durability evaluation equipment 30 may be inputted. The parameters relevant to the unit cell 1 include data of the size and shape of the constituent members, data relevant to materials of the members such as the water absorption linear expansion coefficient and the modulus of elasticity of the polymer electrolyte membrane 10, and the load to be applied to the respective members by bonding (screw-fastening). The parameters also include the boundary condition of the water distribution. The boundary condition is, for example, the water concentration to the water absorption of 0.0 at an end part of the polymer electrolyte membrane 10 and 1.0 at the projection parts of the gas channel 21 of the polymer electrolyte membrane 10. Herein, the water absorption means an absorption in a saturated water absorption state, that is, in a state where the polymer electrolyte membrane 10 is absorbed with water by impregnation. Further, the parameters also include the data necessary for producing the finite element model of the unit cell 1, for example, the number of the nodes and data of the lengths of sides of elements. The respective parameters received in the reception part 31 are transmitted to the model production part 32 and the like and employed as necessary.

The model production part 32 is model production means for producing the finite element model of the unit cell 1 divided into a plurality of elements based on the parameters received in the reception part 31. The production of the model may be carried out by an existing method as described above.

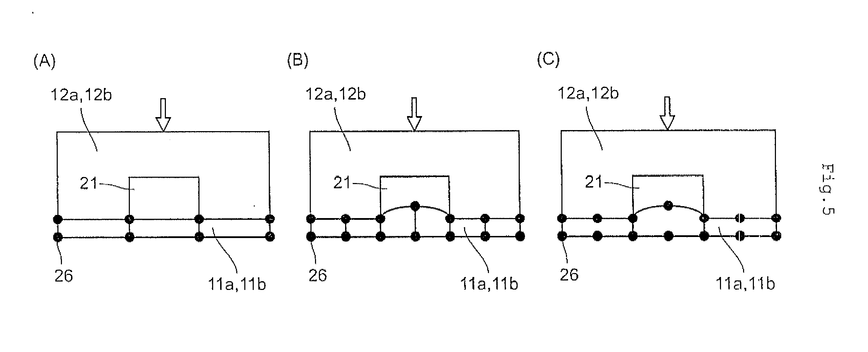

This finite element model is desired to be for the case where the gas channel 21 formed in the separators 12a and 12b have nodes. Since the gas channel 21 becomes a void, a pressure difference between the part of the gas channel 21 and the part other than the gas channel 21 is generated and thus a pressure like the one by mold pressing is applied to the electrodes 11a and 11b. Accordingly, in the finite element model, as shown in Fig. 5A, if one side of elements including the gas channel 21 is wide and there is no node 26 in the channel part, it becomes impossible to express any effect of straining the channel part in the model and therefore, stress calculation with high precision cannot be done.

Accordingly, as shown in Fig. 5B, for example, it is preferable that the width of one side of the elements is set to be at least 1/2 of the width of the channel and the part of the gas channel 21 has the nodes 26. Further, as shown in Fig. 5C, alternatively, it is allowed to provide the gas channel 21 with middle nodes 26 although one side of the elements is wide. However, in the case the gas channel 21 is sufficiently small and does not cause a significant effect, it is not necessarily required to form the nodes 26 in the part of the gas channel 21.

With respect to the nodes and elements of the finite element model, for example, it is preferable to divide regions for the part of the polymer electrolyte membrane 10 and set the part where the electrodes 11a and 11b are brought into contact with the gas channel 21 to the above-mentioned conditions. The produced finite element model can be employed for calculation with respect to the following constituent elements.

The water distribution calculation part 33 is water distribution calculation means for calculating the water distribution in the finite element model produced in the model production part 32 based on the water distribution boundary conditions included in the parameters received by the reception part 31 by a finite element method. The calculation will be described more specifically later. The data of the calculated water distribution is transmitted to the strain/stress calculation part 34.

The strain/stress calculation part 34 is strain/stress calculation means for calculating the strain and stress of the respective elements of the polymer electrolyte membrane 10 from the water distribution calculated by the water distribution calculation part 33 and the water absorption linear expansion coefficient and the modulus of elasticity of the polymer electrolyte membrane 10 included in the parameters received by the reception part 31 by the finite element method. The calculation will be described more specifically later. The calculated stresses of the respective elements are transmitted to the equivalent stress calculation part 35.

The equivalent stress calculation part 35 is equivalent stress calculation means for calculating the equivalent stresses in the respective elements from the stresses of the respective elements calculated by the strain/stress calculation part 34. The equivalent stresses mean scalar quantities having no directionality and calculated from the stresses, the tensor quantities. The calculation of the equivalent stresses is for making calculation easy to lead out evaluation values for which the stress values are used in the post-step since the stresses calculated by the strain/stress calculation part 34 are generally tensor quantities. The calculated equivalent stresses of the respective elements are transmitted to the evaluation value lead-out part 36.

The evaluation value lead-out part 36 is evaluation value lead-out means for leading out the evaluation values for evaluating the durability of the unit cell 1 from the equivalent stresses in the respective elements calculated by the equivalent stress calculation part 35. The evaluation values are led out from a previously set calculation expression from the values indicating the ranges in which a stress at a prescribed level or higher is generated in a non-efficacious power generation region of the polymer electrolyte membrane 10. The evaluation values and leading out of them will be described more specifically later. The led out evaluation values are transmitted to the output part 37 or the determination part 38.

The output part 37 is output means for outputting the evaluation values led out by the evaluation value lead-out part 36. Output is carried out, for example, for a display apparatus (not illustrated) which the durability evaluation equipment 30 is provided with. Owing to this output, users can refer to the evaluation result of durability of the unit cell 1. Further, to show the evaluation result more comprehensibly, a graph of the stress or the like may be output together with output of the evaluation value. The output is not necessarily required to be carried out in the display apparatus and may be carried out in another apparatus.

The determination part 38 is means for determining whether a series of processings for durability evaluation of the unit cell 1 should be repeated or not. Specifically, the determination part 38 determines whether the evaluation values led out by the evaluation value lead-out part 36 are converged or not and if it is determined not converged, changes the number of the nodes of elements of the finite element model and again makes the model production part 32 produce a finite element model to lead out the evaluation values. The determination part 38 makes the output part 37 output the evaluation values in the case of determining converged.

Further, the determination part 38 determines whether the evaluation values led out by the evaluation value lead-out part 36 satisfy the previously set finishing condition or not and if determining that the values do not satisfy the condition, the part 38 makes the model production part 32 produce again a finite element model based on parameters different from the parameters relevant to leading-out of the evaluation values and leads out the evaluation values. If determining that the values satisfy the finishing condition, the determination part 38 makes the output part 37 output the evaluation values. The processing of the determination part 38 will be described more specifically later.

The input apparatus 40 is an apparatus to be used by a user for inputting the data to the durability evaluation equipment 30. Specifically, the apparatus is an apparatus such as a keyboard.

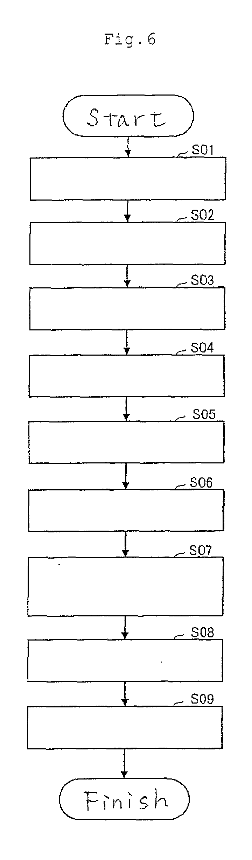

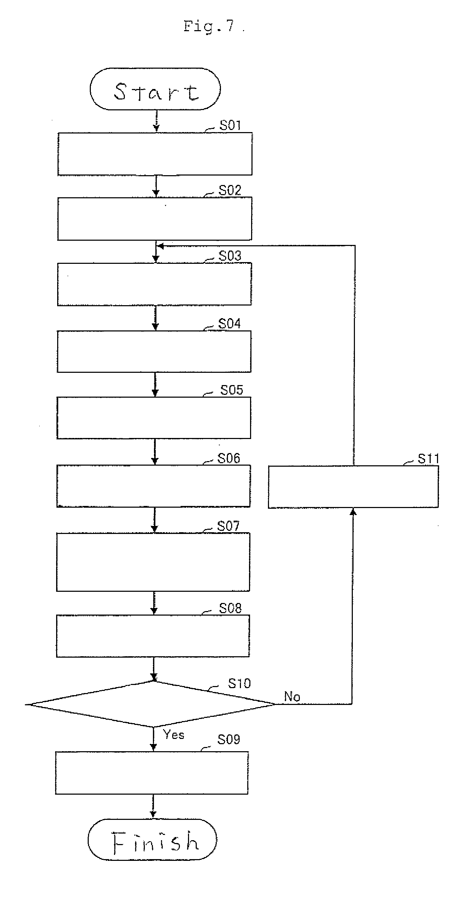

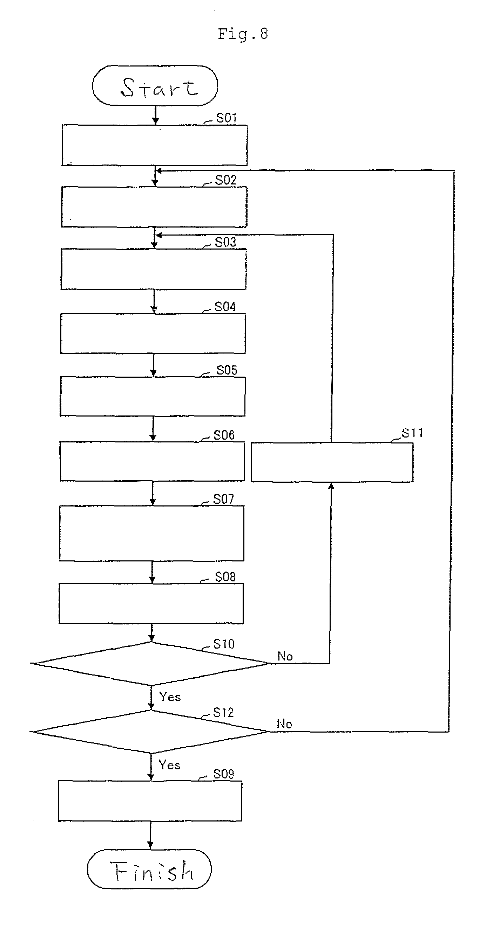

Next, a durability evaluation method of the unit cell 1 of this embodiment (processing to be executed by the durability evaluation equipment 30) will be described using flow charts of Fig. 6 to Fig. 8. First, basic processing of the durability evaluation method is explained as the processing of a first embodiment and then, using Fig. 7 and Fig. 8, more practical processing will be described as second and third embodiments.

[First embodiment]

In the durability evaluation method, a user inputs parameters relevant to the unit cell 1, an object of evaluation, to the durability evaluation equipment 30 using the input apparatus 40. Herein, input of parameters may be carried out directly by a user, or by previously storing parameters in the durability evaluation equipment 30 and appointing them by a user. When the input is done, the parameters are received in the reception part 31 in the durability evaluation equipment 30 (S01, reception step). The received input parameters are transmitted to the model production part 32.

Next, based on the above-mentioned parameters, a finite element model of the unit cell 1 divided into a plurality of elements is produced by the model production part 32. Production of the finite element model is carried out as follows. First, based on the data of the size and shape of members composing the unit cell 1, the configuration of the unit cell 1 is set (S02, model production step). Then, based on the data of the number of nodes and side lengths of elements, the above set configuration of the unit cell 1 is divided into elements (S03, model production step). Further, in the setting of the finite element model, an efficacious power generation region and a non-efficacious power generation region are set in the polymer electrolyte membrane 10. In the following processing, the calculation can be carried out using the finite element model produced in such a manner.

Next, the water distribution in the produced finite element model is calculated based on the boundary condition of water distribution contained in the above-mentioned parameters by the water distribution calculation part 33 (S04, water distribution calculation step). The calculation of the water distribution can be carried out specifically as follows. In the finite element model, the efficacious power generation region of the polymer electrolyte membrane 10 is put in a saturated water absorption state and the outer rim part of the polymer electrolyte membrane 10 is assumed to be in an absolutely dry state. Then, the water distribution in the non-efficacious power generation region is obtained using the Fick's second law, a diffusion equation in the case where no external force is applied. Calculation of the water distribution is carried out in all the modeled regions (including the separators). Accordingly, this calculation is carried out for the entire system. In the case of calculating using the Fick's second law, the diffusion coefficient of water is employed. The content of the above description is described more in detail in "IWANAMI RIKAGAKUJITEN, vol.5, p. 1149 (1998), published by IWANAMI SHOTEN". The water distribution obtained by this calculation is specifically, for example, data of the amounts of water (water contents) in the respective elements. The data showing the calculated water distribution is transmitted to the strain/stress calculation part 34.

Next, the strains and stresses of the respective elements of the polymer electrolyte membrane 10 are calculated from the water distribution calculated by the strain/stress calculation part 34 and the water absorption linear expansion coefficient and the modulus of elasticity of the polymer electrolyte membrane 10 (S05, strain/stress calculation step). Herein, the water absorption linear expansion coefficient may be assumed to be same in the direction along the main face of the polymer electrolyte membrane 10 and in the thickness direction. In addition, the water absorption linear expansion coefficient to be inputted in the input step (in the direction along the main face of the polymer electrolyte membrane 10) is better to be calculated previously by the following experimental technique. The length Ld of one side of the polymer electrolyte membrane 10 is measured after water absorption and swelling by immersing the polymer electrolyte membrane 10 in hot water at 80°C for about 1 hour. The length Lw of one side when the water adsorption reaches equilibrium at 23°C and a relative humidity of 50% is measured. From these values, $100 \times (Lw - Ld)/Ld$ is calculated and the result is defined as the water absorption linear expansion coefficient. The calculated strain data of the respective elements is transmitted to the equivalent stress calculation part 35.

The modulus of elasticity to be used for the stress calculation is better to be calculated previously by an experimental technique after the polymer electrolyte membrane is swollen by water absorption and subjected to a tensile test or the like. In this case, the water content of the polymer electrolyte membrane 10 subjected to the tensile experiment can be calculated in accordance with an absolute dry weight meter.

Next, the equivalent stresses of the respective elements of the polymer electrolyte membrane 10 are calculated from stresses of the respective elements calculated by the equivalent stress calculation part 35 (S06, stress calculation step). Herein, the calculation of the equivalent stresses is desirable to be carried out using the expression of von Mises equivalent stress. Since the stresses are essentially tensor quantities, they are composed of 9 components and can be calculated generally as their component values by a finite element method. The x-direction and the y-direction mutually crossing at right angles are set along the main face of the polymer electrolyte membrane 10 and the z-direction is set at right angles to the x-direction and the y-direction in the thickness direction. Those obtained by calculation by the finite element method for the respective elements are stress components $\sigma_x$, $\sigma_y$, $\sigma_z$ in the x-direction, the y-direction, and the z-direction and $\tau_{xy}$, $\tau_{yz}$, $\tau_{zx}$. In this embodiment, using the expression of von Mises equivalent stress defined by the following (Expression 3), the equivalent stress $\tau$, a scalar quantity, is calculated and the equivalent stress is defined as the equivalent stress for each element.

$$\tau = \sqrt{\frac{\left(\sigma_x - \sigma_y\right)^2 + \left(\sigma_y - \sigma_z\right)^2 + \left(\sigma_z - \sigma_x\right)^2 + 6\left(\tau_{yz}^2 + \tau_{zx}^2 + \tau_{xy}^2\right)}{2}}$$ (Expression 3)

Evaluation by using the stress $\tau$, the scalar quantity, is simpler and more reliable than evaluation by respectively evaluating 9 components. The data of the equivalent stresses calculated for the respective elements is transmitted to the evaluation value lead-out part 36.

Next, an evaluation value for evaluating durability of the unit cell 1 is led out from the respective equivalent stresses of the respective elements calculated by the evaluation value lead-out part 36. Leading out of the evaluation value is specifically carried out as follows. First, among elements whose stresses are calculated, an average value $S_{av}$ of the stresses of the elements in the efficacious power generation region is calculated. Next, the elements of a non-efficacious power generation region in which the stress is c × $S_{av}$ or higher in relation to a coefficient c are extracted (S07, evaluation value lead-out step). Herein, the coefficient c is a previously determined value of 1 or higher. Specifically, it is desirable to set the coefficient c to be 1.2. In addition, this specific numeric value is a value experimentally obtained by the inventors of the present invention and makes it possible to carry out more proper evaluation of the durability.

Next, a sum $V_z$ of the volumes of the extracted elements in the non-efficacious power generation region is calculated. Further, the values of a volume V0 of the polymer electrolyte membrane 10, a volume Vy of the efficacious power generation region in the polymer electrolyte membrane 10, and a thickness d of the polymer electrolyte membrane are calculated from the parameters of the unit cell. From these values, $\alpha$ and $\beta$ are led out as evaluation values for evaluation according to the following (Expression 1) and (Expression 2) (S08, evaluation value lead-out step).

$$\alpha = \left(\sqrt{\frac{Vy}{d} + \frac{Vz}{d}} - \sqrt{\frac{Vy}{d}}\right) \times \left(\sqrt{\frac{V0}{d}} - \sqrt{\frac{Vy}{d}}\right)$$ (Expression 1)

$$\beta = \left(\sqrt{\frac{Vy}{d} + \frac{Vz}{d}} - \sqrt{\frac{Vy}{d}}\right) \times \left(\sqrt{\frac{V0}{d}} - \sqrt{\frac{Vy}{d}}\right) \times \frac{d}{V0}$$ (Expression 2)

The led out evaluation values $\alpha$ and $\beta$ are transmitted to the output part 37.

Next, $\alpha$ and $\beta$, as the evaluation values of the durability of the unit cell 1, are output by the output part 37 (S09, output step).

The inventors of the present invention have found that with respect to the evaluation values expressed by $\alpha$ and $\beta$, the mechanical deterioration due to the water absorption stress of the unit cell can remarkably be suppressed in the case $\alpha$ is in a range of from 0 [mm²] or higher to 50.0 [mm²] or lower and $\beta$ is in a range of from 0 or higher to 0.01 or lower and that it is made possible to obtain a unit cell with high durability. In this connection, it is made possible to control $\alpha$ and $\beta$ in the above-mentioned ranges by controlling the contact surface area (efficacious power generation region) of the polymer electrolyte membrane and a catalyst layer and altering the shapes of the gas channels of separators in addition to the water absorption linear expansion coefficient and the modulus of elasticity of the polymer electrolyte membrane. According to the evaluation method of the present invention, with no need of actually assembling a unit cell to carry out a durability evaluation test, a unit cell having high durability can be designed easily by using such parameters as input data. Additionally, $\alpha$ and $\beta$ are preferable to be smaller since the durability becomes better and particularly, $\alpha$ is more preferable to be 40.0 [mm$^2$] or lower, furthermore preferable to be 30.0 [mm$^2$] or lower, and particularly preferable to be 20.0 [mm$^2$] or lower. Further, $\beta$ is more preferably 0.008 or lower and even more preferably 0.006 or lower.

The above-mentioned evaluation value lead-out part 36 may, in addition to outputting the evaluation values of the durability of the unit cell 1, lead out evaluation values of the power generation function of the unit cell 1 and output them in combination with the evaluation values of the durability by outputting by the output part 37. For example, the evaluation values of the power generation function can be calculated according to the ratio of the efficacious power generation region = (surface area of efficacious power generation region)/(surface area of main face of separator). The higher this evaluation value is, the higher the power generation function of the unit cell 1 is regarded.

Further, since the size in the thickness direction of the polymer electrolyte membrane 10 is much smaller in comparison to the sizes in the plane directions of the membrane, there is no need to element-divide the thickness direction at the time of element division (S03) and thus the calculation is made simple. That is, with respect to the polymer electrolyte membrane 10, the calculation can be simplified by two-dimensional element division rather than by three-dimensional element division.

As described above, according to this embodiment, in consideration of the stress corresponding to the water distribution of the polymer electrolyte membrane 10, namely the water absorption stress, the durability of the unit cell 1 of a fuel cell can be evaluated. Further, according to this embodiment, evaluation can be carried out by the durability evaluation equipment 30 as a information-processing equipment, so that the durability of the unit cell 1 can be easily evaluated since there is no need to actually produce the unit cell 1 for evaluation.

Moreover, when $\alpha$ and $\beta$ are used as in the case of this embodiment, in the above-mentioned evaluation method, the durability of the unit cell 1 can be evaluated properly. However, $\alpha$ and $\beta$ do not have to be necessarily employed as evaluation values for the evaluation of the durability.


[Second embodiment]


The processing of this embodiment involves processing for improving the reliability of the evaluation value. The flow chart of the processing of this embodiment is shown in Fig. 7. The evaluation values led out by employing calculation by the finite element method may vary depending on the number of nodes in the element division (S03). In this embodiment, a value with which the evaluation value does not substantially fluctuate even if the number of the nodes exceeds a certain level, that is, a converged value of the evaluation value is measured.

As shown in Fig. 7, from the input reception of parameters (S01) to lead-out of the evaluation value (S08), the processings are same as those of the first embodiment. When the evaluation value is led out, the evaluation value is transmitted to the determination part 38. In the determination part 38, whether the evaluation value is converged or not is determined (S10, convergence determination step). Specifically, the led out evaluation value and the evaluation value led out in the previously repeated processing are compared and if the difference is within prescribed thresholds, it is determined that the led out evaluation value is converged.

In the case it is determined that the evaluation value is converged by the determination part 38, the evaluation value is transmitted to the output part 37 and output by the output part 37 (S09, output step). If it is determined not converged, control is performed so that the number of nodes of the elements of the finite element model of the unit cell 1 is increased for the model production part 32 by the determination part 38 (S11, convergence determination step) and the element division is again carried out (S03, model production step). The number of the nodes is increased in a manner that the distance between the sides of the element is made to be 1/2. After the element division by the model production part 32, a series of processings (S04 to S08) for leading out the evaluation value are carried out again.

In addition, the data of the thresholds to be employed in the above-mentioned processings, the way of increasing the number of nodes and the like may previously be included in the parameters received in the reception part 31 or previously stored in the durability evaluation equipment 30. As described above, according to this embodiment, the reliability of the evaluation value can be heightened.


[Third embodiment]


The processing of this embodiment is a processing for knowing parameters of the unit cell 1 having prescribed durability. A flow chart of the processing of this embodiment is shown in Fig. 8.

As shown in Fig. 7, processings from the input reception of parameters (S01) to the determination of evaluation value convergence (S10, S11) are similar to those of the second embodiment. On completion of the above-mentioned processings, whether the evaluation values satisfy the previously set finishing condition or not is determined (S12, condition determination step). The previously set finishing condition specifically means whether the evaluation values are under the set thresholds or not. The thresholds are preferably set to be, for example, 50.0 [mm$^2$] for $\alpha$ and 0.01 for $\beta$. The values are obtained experimentally by the inventors of the present invention.

In the case it is determined by the determination part 38 that the finishing condition is satisfied, the evaluation value is transmitted to the output part 37 and output by the output part 37 (S09, output step). In the case it is determined that the finishing condition is not satisfied, the determination part 38 controls the model production part 32 to alter the values of the parameters (S12, convergence determination step) to set the configuration of the finite element model of the unit cell 1 again (S02, model production step). This alteration is preferable to be carried out in a manner that the evaluation values are decreased.

The values of the parameters to be changed are constants for determining the types of materials, such as the modulus of elasticity and water absorption linear expansion coefficient. The parameters are altered by setting and altering upper limit values, lower limit values, and dividing widths, respectively. Alteration of the parameters may also correspond to alteration of the shape of the gas channel 21, decrease in the introduction amount of ion-exchange groups of a proton conductive polymer electrolyte of the polymer electrolyte membrane 10, or cross-linking the polymer electrolyte membrane 10 by electron beam cross-linking, thermal cross-linking, or peroxide cross-linking. Further, the sizes or shapes of the members composing the unit cell 1 may be changed. After the setting of the finite element model is carried out by the model production part 32, a series of the processings for leading out the evaluation values (S03 to S08, S10, and S11) are carried out again.

The data such as the thresholds to be used in the above-mentioned processings and the way of altering the parameters may be included in the parameters to be received by the reception part 31 or previously stored in the durability evaluation equipment 30.

Further, in the above-mentioned processing, it is preferable to carry out the processing while keeping the ratio of the efficacious power generation region = (surface area of efficacious power generation region)/(surface area of main face of separator), namely the above-mentioned evaluation value of the power generation function, at a prescribed value or higher. That is, it is preferable to set a parameter with which the ratio of the efficacious power generation region is a prescribed value or higher. According to this embodiment, the parameter having prescribed durability can be known and can be employed usefully for designing the unit cell 1. Further, in consideration of the evaluation value of the power generation function, it is made easy to design a unit cell 1 which can practically simultaneously satisfy both of the operation life of the fuel cell and the power generation efficiency.

Next, a durability evaluation program for the unit cell 1 for executing a series of the above-mentioned processings for evaluating durability of the unit cell 1 by the information-processing equipment will be described. As shown in Fig. 8, a durability evaluation program 51 for the unit cell 1 is stored in a program storage region 50a formed in a recording medium 50 disposed in the information-processing equipment.

The durability evaluation program 51 of the unit cell 1 includes a main module 51a for comprehensively controlling the evaluation processing of the durability of the unit cell 1, a receiving module 51b, a model production module 51c, a water distribution calculation module 51d, a strain/stress calculation module 51e, an equivalent stress calculation module 51f, an evaluation value lead-out module 51g, and an output module 51h. The functions performed by executing the components described above which the durability evaluation equipment 30 for the unit cell 1 is provided with are same as the functions of the respective parts 31 to 37 corresponding to the respective modules 51b to 51h.

The durability evaluation program 51 of the unit cell 1 may have a configuration of being partially or entirely transmitted through a transmission medium such as a communication line and received and recorded (including installation) by another appliances.

Next, the present invention will be described more in detail along with examples; however, the present invention should not be limited to these examples.

[Example 1 of durability evaluation method, Example 1 of unit cell]

In this example, a unit cell 1 was actually produced and the durability was measured and compared with the evaluation by the durability evaluation method of the present invention. The production of the unit cell 1 was carried out in the following manner.

Synthesis Example 1 (Synthesis of polymer electrolyte)

(A) Synthesis of polyether sulfones

Under nitrogen atmosphere, 1000 g of a polyether sulfone having hydroxide groups at terminals (Sumikaexcel PES4003P, manufactured by Sumitomo Chemical Co., Ltd.) was dissolved in 2500 mL of N,N-dimethylacetamide (hereinafter, referred to as DMAc). Further, 11.0 g of potassium carbonate, 53.6 g of decafluorobiphenyl, and 50 mL of toluene were added and reaction was carried out at 80°C for 2 hours and at 100°C for 1 hour. Thereafter, the reaction solution was poured in methanol to precipitate a polymer, which was filtered and dried to obtain a polyether sulfone (d). The polyether sulfone (d) is a polyether sulfone having nonafluorobiphenyloxy groups substituted at the terminals.

(B) Synthesis of poly(2,6-diphenylphenylene ether)

In the atmosphere, 2.94 g (30.0 mmol) of cuprous chloride anhydride and 3.51 g (30.0 mmol) of N,N,N',N'-tetramethylethylenediamine were stirred in 1500 mL of chlorobenzene at 40°C for 60 minutes. Further, 17.1 g (60.0 mmol) of 2,2',6,6'-tetramethylbisphenol A and 148 g (600 mmol) of 2,6-diphenylphenol were added and stirred at 40°C for 7 hours in the atmosphere. On completion of the reaction, the solution was poured in methanol containing hydrochloric acid to precipitate a polymer, which was filtered and dried to obtain poly(2,6-diphenylphenylene ether) having hydroxyl groups at both terminals (PE3).

(C) Synthesis of block copolymer

A flask provided with an azeotropic distillation apparatus was loaded with 160 g of PE3, 32 g of potassium carbonate, 3500 mL of DMAc, and 200 mL of toluene and the mixture was heated and stirred to dehydrate the mixture under an azeotropic condition of toluene and water and thereafter, toluene was removed by distillation. 640 g of the above-mentioned polyether sulfone (d) was added thereto and the mixture was heated and stirred at 80°C for 5 hours, at 100°C for 5 hours, and at 120°C for 3 hours. The reaction solution was added dropwise to a large quantity of methanol in an acid state with hydrochloric acid and the obtained precipitate was recovered by filtration to obtain a block copolymer by vacuum drying at 80°C. The obtained block copolymer in an amount of 600 g was stirred with 6000 mL of 98% sulfuric acid at room temperature to obtain a uniform solution and thereafter, the solution was continuously stirred for 24 hours. The obtained solution was added dropwise to a large quantity of ice water and the obtained precipitate was recovered by filtration. Further, after washing with ion-exchanged water by a mixer was repeated until the washing liquid became neutral, the product was vacuum dried at 40°C to obtain a sulfonated block copolymer.

Synthesis Example 2 (Synthesis of additive)

A polymer electrolyte containing an aromatic polymer into which phosphonic acid was introduced was synthesized according to the method described in Examples of JP-A No. 2003-238678 and used as an additive.

Production of electrodes

A catalyst layer solution was prepared by adding 500 mg of platinum-supporting carbon containing 30 wt.% of platinum to 5 mL of a Nafion solution (5 wt.%, manufactured by Aldrich) and well stirring the mixture. This catalyst layer solution was applied to a carbon cloth (manufactured by E-TEK) by screen printing in a manner that the platinum deposition density became 0.6 mg/cm$^2$ and the solvent was removed to obtain a gas diffusion layer-catalyst reaction layer assembly.
Membrane formation of polymer electrolyte membrane
The block copolymer obtained in Synthesis Example 1 and the additive obtained in Synthesis Example 2 were mixed at 95 : 5 amount ratio and further dissolved in N-methylpyrrolidone so that the solid matter concentration became 27% by weight to obtain a polymer electrolyte solution. The polymer electrolyte solution was dropwise applied to a porous membrane of polyethylene fixed on a glass plate. The polymer electrolyte solution was evenly applied and spread onto the porous membrane with a wire coater and the coating thickness was controlled with a bar coater with a clearance of 0.3 mm and the membrane was dried at 80°C under normal pressure. Thereafter, the membrane was immersed in 1 mol/L hydrochloric acid and further washed with ion-exchanged water to obtain a polyethylene composite polymer electrolyte membrane (polymer electrolyte membrane 10).
After the obtained polymer electrolyte membrane 10 was immersed in hot water at 80°C for 1 hour to swell the membrane by water absorption, the water absorption linear expansion coefficient in the plane direction was calculated according to an equation $100 \times (Lw1 - Ld1)/Ld1$ by measuring the length of one side of the water-saturated membrane defined as Ld1 and the length Lw1 of the side when the water adsorption reached equilibrium at 23°C and a relative humidity of 50% to find it was 6.0%.
Further, after the polymer electrolyte membrane 10 was saturated with water absorption in the same manner as described above and the modulus of elasticity was measured by a tensile test according to JIS K7127 (measurement temperature 80°C, relative humidity 50%, measurement apparatus: Environment-controllable tensile tester, manufactured by Instron Co.) to find it was 28.94 MPa. Further, while assuming that the diffusion coefficient of the sulfonated polyether ketone membrane described in K. D. Kreuer, Journal of Membrane Science, 185, p 29-39, (2001) and the diffusion coefficient of the polymer electrolyte membrane used in this example were approximately the same, the diffusion coefficient was set to be $1.0 \times 10^{-9}$/mm$^2$.sec. These values were employed as parameters for input in the durability evaluation method of the unit cell 1 of the present invention.

Production of unit cell 1 of flat type fuel cell

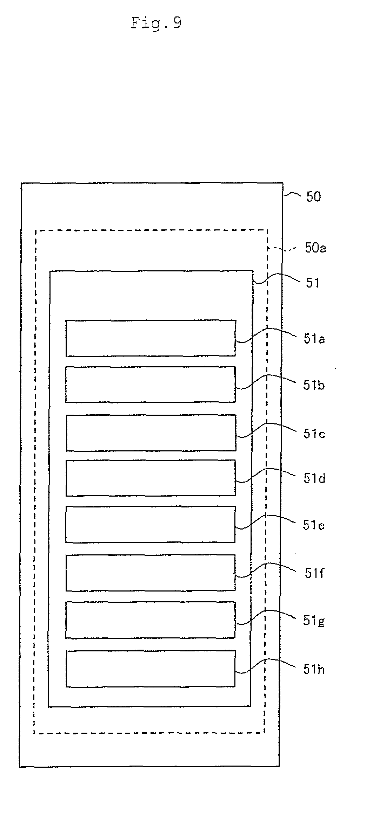

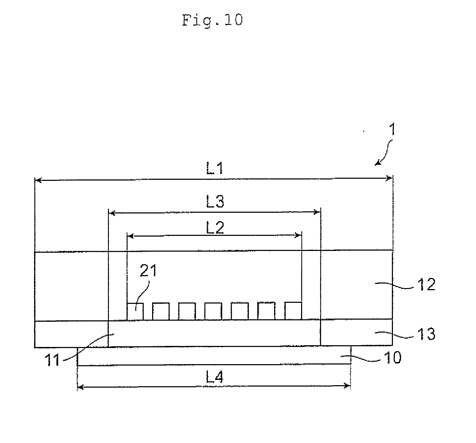

Fig. 9 shows a cross-sectional view of the unit cell 1 used in this example. A commercially available JARI cell (sold by Eiwa Corporation, hereinafter called as Cell 1) was used. Herein, in Cell 1, the separator 12 has a face having contact with MEGA with a size of 80 mm $\times$ 80 mm (L1 in Fig. 10 is 80 mm) and a meandering gas channel 21 (channel groove width 1 mm). The surface area surrounding the outer rim of the gas channel 21 is 52 mm $\times$ 52 mm (L2 in Fig. 10 is 52 mm). The gas seal component 13 is a laminate of silicone rubber-polyethylenenaphthalate-silicone rubber (thickness 230 $\mu$m, 8.0 cm $\times$ 8.0 cm) and the region in the center with a size of 58 mm $\times$ 58 mm (L3 in Fig. 10 is 58 mm) is cut out. The above-mentioned solid polymer electrolyte membrane 10 cut out in a size of 70 mm $\times$ 70 mm (L4 in Fig. 10 is 70 mm) and electrodes 11 (the diffusion coefficient measured by the same method as in the above-mentioned polymer electrolyte membrane 10 was $1.0 \times 10^{-7}$/mm$^2$.sec), namely the gas diffusion layer-catalyst reaction layer assembly cut out in a shape same as that of the aperture part of the gas seal component 13, were assembled to form the unit cell 1 (that is, the size of the efficacious power generation region was set to be 58 mm $\times$ 58 mm).

Execution of durability test

A durability test was carried out for the unit cell 1 produced in the above-mentioned manner. Specifically, continuous power generation of a fuel cell for continuously generating a constant electric current was carried out. The test conditions were as follows: cell temperature 95°C, bubbler temperature: 95°C (anode), 95°C (cathode), gas flow rate: 70 mL/min (anode), 160 mL/min (cathode), back pressure: 0.1 MPaG (anode), 0.1 MPaG (cathode), current: 2.5 A. As a result of the durability test, the voltage was kept at an approximately constant value (0.8 V) for 1000 hours from the start of the test and no decrease was observed. Further, no mechanical deterioration was caused.

Evaluation by the present invention

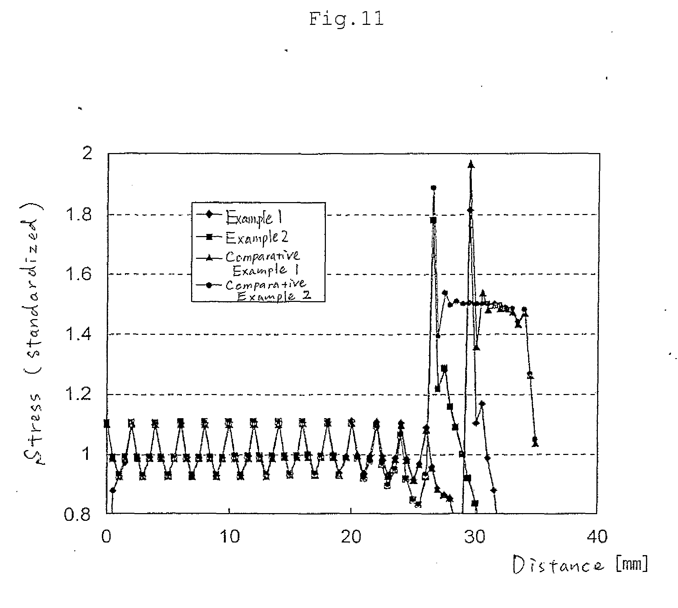

The above-mentioned unit cell 1 was evaluated by the durability evaluation method of the unit cell 1 according to the present invention. $\alpha$ was 17.4 [mm$^2$]; $\beta$ was 0.0036; and the ratio of the efficacious power generation region was 0.53. Since it can be determined that the unit cell 1 has sufficient durability if $\mu$ is 50.0 [mm$^2$] or lower and $\beta$ is 0.01 or lower, the durability evaluation could be carried out properly by the durability evaluation method of the unit cell 1 of the present invention. Further, since it can be determined that a sufficient power generation function is provided if the ratio of the efficacious power generation region is approximately 0.3 or higher, the above-mentioned unit cell 1 was evaluated to have a sufficient power generation function by this method. A graph of the equivalent stress of the polymer electrolyte membrane 10 calculated by the durability evaluation method of the unit cell 1 according to the present invention is shown in Fig. 11. In the graph of Fig. 11, the abscissa axis shows the distance from the center of the polymer electrolyte membrane 10 and the ordinate axis shows the normalized equivalent stress (the average equivalent stress in the efficacious power generation region is set to be 1). In the non-efficacious power generation region, the portion where a stress 1.2 times as high as the average equivalent stress of the efficacious power generation region was generated had a size corresponding to the sum $V_z$ of the volumes of the elements in the non-efficacious power generation region.

[Example 2 of durability evaluation method, Comparative Example 1 of unit cell]

JARI cell 2 (sold by Eiwa Corporation, hereinafter called as Cell 2) same as that of Example 1 was used, except that the efficacious power generation region of Cell 1 was changed to be 52 mm $\times$ 52 mm (L3 in Fig. 10 is 52 mm). The polymer electrolyte membrane 10 and the separator 12 same as those in Example 1 were used. The gas seal component 13 is a laminate of silicone rubber-polyethylenenaphthalate-silicone rubber (thickness 230 $\mu$m, 80 mm $\times$ 80 mm) and the region in the center with a size of 52 mm $\times$ 52 mm (L3 in Fig. 10 is 52 mm) is cut out. The above-mentioned solid polymer electrolyte membrane 10 cut out in a size of 70 mm $\times$ 70 mm (L4 in Fig. 10 is 70 mm) and electrodes 11, namely the gas diffusion layer-catalyst reaction layer assembly cut out in a shape same as that of the aperture part of the gas seal component 13, were assembled to form the unit cell 1 (that is, the size of the efficacious power generation region was set to be 52 mm $\times$ 52 mm. As a result of the durability test, the voltage was kept at an approximately constant value (0.78 V) for about 120 hours from the start of the test; however, after about 120 hours, gas leakage occurred and power generation was impossible to be continued.

The above-mentioned unit cell 1 was evaluated by the durability evaluation method of the unit cell 1 according to the present invention. $\alpha$ was 60.8 [mm$^2$]; $\beta$ was 0.012; and the ratio of the efficacious power generation region was 0.42. Since it can be determined that the unit cell 1 has sufficient durability if $\alpha$ is 50.0 [mm$^2$] or lower and $\beta$ is 0.01 or lower, it can be said that no sufficient durability was provided in this example. Also in the experimental result, it was indicated that the durability was low as compared with that of the unit cell of Example 1. Further, since it can be determined that a sufficient power generation function is provided if the ratio of the efficacious power generation region is approximately 0.3 or higher, the above-mentioned unit cell 1 was evaluated to have a sufficient power generation function by this method. A graph of the equivalent stress of the polymer electrolyte membrane 10 calculated by the durability evaluation method of the unit cell 1 according to the present invention is shown in Fig. 11. In the non-efficacious power generation region, the portion where an equivalent stress 1.2 times as high as the average equivalent stress of the efficacious power generation region was generated had a size corresponding to the sum $V_z$ of the volumes of the elements in the non-efficacious power generation region.

[Comparative Examples 1 and 2 in durability evaluation method]

With respect to the durability evaluation method of a unit cell 1 of the present invention in Examples 1 and 2 by the durability evaluation method, the water distribution was calculated based on boundary conditions of water distribution and the durability was evaluated based on the water distribution. The results shown as Comparative Examples 1 and 2 (corresponding to Examples 1 and 2, respectively, in the durability evaluation method) in the durability evaluation method are of the case where the water distribution was not properly considered. In these comparative examples, the evaluation values were led out assuming that the water distribution was in a saturated water absorption state in the entire polymer electrolyte membrane. A graph of equivalent stresses of the polymer electrolyte membranes 10 in Comparative Examples 1 and 2 is shown in Fig. 11. From this graph, it was confirmed that there was no correlation with the results of the corresponding durability test, except that the positions of the non-efficacious power generation region differ. In the non-efficacious power generation region, the portions where a stress 1.2 times as high the average equivalent stress in the efficacious power generation region were wider than those in Examples 1 and 2. Further, when the evaluation values of Comparative Examples 1 and 2 were led out, $\alpha$ was 131 [mm$^2$] and $\beta$ was 0.027 for Comparative Example 1 and $\alpha$ was 308 [mm$^2$] and $\beta$ was 0.063 for Comparative Example 2. These results show that the difference in the durability caused by the unit cell configuration was evaluated low as compared with the corresponding evaluation results of Examples 1 and 2 and accordingly, it can be understood that in the case evaluation was carried out without calculating the water distribution unlike the present invention, no proper evaluation could be carried out.

[Example 3 of durability evaluation method, Comparative Example 2 of unit cell]

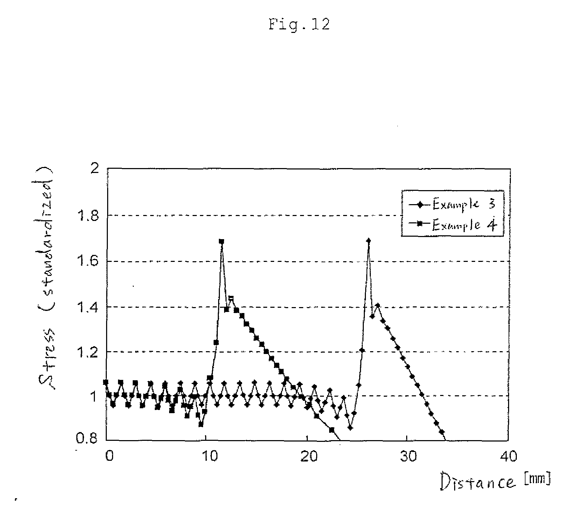

With respect to a cell manufactured by ElectroChem, Inc. generally used as a cell for a fuel cell (hereinafter, called as Cell 3), evaluation was carried out by the durability evaluation method of the unit cell 1 of the present invention. The separator 12 has a face having contact with MEGA with a size of 95 mm × 95 mm (L1 in Fig. 10 is 95 mm) and a meandering gas channel 21 (channel width 1 mm). The surface area surrounding the outer part of the gas channel 21 is 51 mm × 51 mm (L2 in Fig. 10 is 51 mm). The efficacious power generation region was set to be a size of 51 mm × 51 mm (L3 in Fig. 10 is 51 mm). The size of the solid polymer electrolyte membrane 10 was set to be 87 mm × 87 mm (L4 in Fig. 10 is 87 mm) and the water absorption linear expansion coefficient of the polymer electrolyte membrane 10 and the boundary conditions of water distribution were set the same as those of Example 1. Consequently, $\alpha$ was 272 [mm$^2$]; $\beta$ was 0.036; and the ratio of the efficacious power generation region was 0.29. According to the durability evaluation method of the unit cell 1 of the present invention, this unit cell 1 was insufficient in both of the durability and power generation function. A graph of the equivalent stress of the polymer electrolyte membrane 10 calculated by the durability evaluation method of the unit cell 1 according to the present invention is shown in Fig. 12. In the non-efficacious power generation region, the portion where an equivalent stress 1.2 times as high as the average equivalent stress of the efficacious power generation region was generated, had a size corresponding to the sum $V_z$ of the volumes of the elements in the non-efficacious power generation region.

[Example 4 of durability evaluation method, Comparative Example 3 of unit cell]

With respect to another cell manufactured by ElectroChem, Inc. generally used as a cell for a fuel cell (hereinafter, called as Cell 4), evaluation was carried out by the durability evaluation method of the unit cell 1 of the present invention. The separator 12 has a face having contact with MEGA with a size of 95 mm × 95 mm (L1 in Fig. 10 is 95 mm) and a meandering gas channel 21 (channel width 1 mm). The surface area surrounding the outer part of the gas channel 21 is 22 mm × 22 mm (L2 in Fig. 10 is 22 mm). The efficacious power generation region was set to be a size of 22 mm × 22 mm (L3 in Fig. 10 is 22 mm). The size of the solid polymer electrolyte membrane 10 was set to be 87 mm × 87 mm (L4 in Fig. 10 is 87 mm) and the water absorption linear expansion coefficient of the polymer electrolyte membrane 10 and the boundary conditions of water distribution were set the same as those of Example 1. Consequently, $\alpha$ was 662 [mm$^2$]; $\beta$ was 0.087; and the ratio of the efficacious power generation region was 0.054. According to the durability evaluation method of the unit cell 1 of the present invention, this unit cell 1 was insufficient in both of the durability and power generation function. A graph of the equivalent stress of the polymer electrolyte membrane 10 calculated by the durability evaluation method of the unit cell 1 according to the present invention is shown in Fig. 12. In the non-efficacious power generation region, the portion where an equivalent stress 1.2 times as high as the average equivalent stress of the efficacious power generation region was generated, had a size corresponding to the sum $V_z$ of the volumes of the elements in the non-efficacious power generation region.

The evaluation results of the above-mentioned unit cells in Example 1 and Comparative Examples 1 to 3 are shown in the following table.

Table 1

| | $\alpha$ [mm$^2$] | $\beta$ | Ratio of efficacious power generation region |
|---|---|---|---|
| Example 1 | 17.4 | 0.0036 | 0.53 |
| Comparative Example 1 | 60.8 | 0.012 | 0.42 |
| Comparative Example 2 | 272 | 0.036 | 0.29 |
| Comparative Example 3 | 662 | 0.087 | 0.054 |

**Claims**

1. A unit cell durability evaluation method for evaluating a unit cell of a fuel cell comprising a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, in a information-processing equipment, wherein the method comprises:

    a reception step of receiving an input of parameters of the unit cell;
    a model production step of producing a finite element model of the unit cell divided into a plurality of elements based on the parameters received in the reception step;
    a water distribution calculation step of calculating the water distribution of the polymer electrolyte membrane in the finite element model produced in the model production step based on boundary conditions of the water distribution contained in the parameters received in the reception step by a finite element method;
    a strain/stress calculation step of calculating strains and stresses of the respective elements of the polymer electrolyte membrane from the water distribution calculated in the water distribution calculation step and a water absorption linear expansion coefficient and a modulus of elasticity of the polymer electrolyte membrane contained in the parameters received in the reception step by a finite element method;
    an equivalent stress calculation step of calculating equivalent stresses of the respective elements from stresses of the respective elements calculated in the strain/stress calculation step;
    an evaluation value lead-out step of leading out an evaluation value for evaluating durability of the unit cell from the equivalent stresses of the respective elements calculated in the equivalent stress calculation step; and
    an output step of outputting the evaluation value led out in the evaluation value lead-out step.

2. The unit cell durability evaluation method according to claim 1, wherein in the evaluation value lead-out step, an average value $S_{av}$ of the equivalent stresses of the elements in an efficacious power generation region relevant to an electric reaction in the polymer electrolyte membrane among the elements for which the equivalent stresses are calculated in the equivalent stress calculation step is led out; the elements of a non-efficacious power generation region other than the efficacious power generation region of the polymer electrolyte membrane in which the equivalent stress is $c \times S_{av}$ or higher in relation to a set coefficient c of 1 or higher are extracted; and the evaluation value is led out from a calculation expression previously set from the value of a total volume $V_z$ of the extracted elements.

3. The unit cell durability evaluation method according to claim 2, wherein in the evaluation value lead-out step, $\alpha$ led out from the Expression 1 and led out from the Expression 2 from the total volume $V_z$, a volume V0 of the polymer electrolyte membrane, a volume $V_y$ of the efficacious power generation region of the polymer electrolyte membrane, and a thickness d of the polymer electrolyte membrane:

$$\alpha = \left( \sqrt{\frac{Vy}{d} + \frac{Vz}{d}} - \sqrt{\frac{Vy}{d}} \right) \times \left( \sqrt{\frac{V0}{d}} - \sqrt{\frac{Vy}{d}} \right) \quad \text{(Expression 1)}$$

$$\beta = \left( \sqrt{\frac{Vy}{d} + \frac{Vz}{d}} - \sqrt{\frac{Vy}{d}} \right) \times \left( \sqrt{\frac{V0}{d}} - \sqrt{\frac{Vy}{d}} \right) \times \frac{d}{V0} \quad \text{(Expression 2)}$$

are regarded as the evaluation value.

4. The unit cell durability evaluation method according to claim 2 or 3, wherein the coefficient c is 1.2.

5. The unit cell durability evaluation method according to any one of claims 1 to 4, wherein the finite element model having nodes in the gas channels formed in the separators is produced in the model production step.

6. The unit cell durability evaluation method according to any one of claims 1 to 5, wherein the equivalent stress is calculated by employing an expression of von Mises equivalent stress in the equivalent stress calculation step.

7. The unit cell durability evaluation method according to any one of claims 1 to 6, further comprising a convergence determination step of determining whether the evaluation value led out in the evaluation value lead-out step is converged or not and if it is determined converged, outputting the evaluation value in the output step, and if it is determined not converged, changing the number of the nodes of the elements of the finite element model of the unit cell, again producing the finite element model, and leading out the evaluation value.

8. The unit cell durability evaluation method according to any one of claims 1 to 7, further comprising a condition determination step of determining whether the evaluation value led out in the evaluation value lead-out step satisfies a previously set finishing condition or not, and if it is determined satisfied, outputting the evaluation value in the output step, and if it is determined not satisfied, again producing the finite element model based on parameters different from the parameters relevant to leading-out of the evaluation value and leading out the evaluation value.

9. A durability evaluation equipment for evaluating a unit cell of a fuel cell comprising a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein the apparatus comprises:

reception means for receiving an input of parameters of the unit cell;
model production means for producing a finite element model of the unit cell divided into a plurality of elements based on the parameters received by the reception means;
water distribution calculation means for calculating the water distribution of the polymer electrolyte membrane in the finite element model produced by the model production means based on boundary conditions of the water distribution contained in the parameters received by the reception means by a finite element method;
strain/stress calculation means for calculating strains and stresses of the respective elements of the polymer electrolyte membrane from the water distribution calculated by the water distribution calculation means and a water absorption linear expansion coefficient and a modulus of elasticity of the polymer electrolyte membrane contained in the parameters received by the reception means based on a finite element method;
equivalent stress calculation means for calculating equivalent stresses of the respective elements from stresses of the respective elements calculated by the strain/stress calculation means;
evaluation value lead-out means for leading out an evaluation value for evaluating durability of the unit cell from the equivalent stresses of the respective elements calculated by the equivalent stress calculation means; and
output means for outputting the evaluation value led out by the evaluation value lead-out means.

10. A unit cell durability evaluation program for making a information-processing equipment evaluate the durability of a unit cell of a fuel cell comprising a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein the program makes the information-processing equipment execute the following processings:

> a reception processing of receiving an input of parameters of the unit cell;
> a model production processing of producing a finite element model of the unit cell divided into a plurality of elements based on the parameters received in the reception processing;
> a water distribution calculation processing of calculating the water distribution of the polymer electrolyte membrane in the finite element model produced in the model production processing based on boundary conditions of the water distribution contained in the parameters received in the reception processing by a finite element method;
> a strain/stress calculation processing of calculating strains and stresses of the respective elements of the polymer electrolyte membrane from the water distribution calculated in the water distribution calculation processing and a water absorption linear expansion coefficient and a modulus of elasticity of the polymer electrolyte membrane contained in the parameters received in the reception processing by a finite element method;
> an equivalent stress calculation processing of calculating equivalent stresses of the respective elements from stresses of the respective elements calculated in the strain/stress calculation processing;
> an evaluation value lead-out processing of leading out an evaluation value for evaluating durability of the unit cell from the equivalent stresses of the respective elements calculated in the equivalent stress calculation processing; and
> an output processing of outputting the evaluation value led out in the evaluation value lead-out processing.

**11.** A unit cell of a fuel cell comprising a polymer electrolyte membrane, two plate-like electrodes installed on both sides of the polymer electrolyte membrane, two plate-like separators having groove-like gas channels for supplying gases to the electrodes, and a seal component for sealing side faces of the electrodes, wherein, as the evaluation value by the unit cell durability evaluation method according to claim 3 wherein the coefficient c is 1.2, $\alpha$ is in a range of from 0 [mm$^2$] or higher to 50.0 [mm$^2$] or lower and P is in a range of from 0 or higher to 0.01 or lower.

Fig.1

Fig.2

(A)

(B)

Fig.3

Fig.4

(A)

12a,12b

21

26

11a,11b

(B)

12a,12b

21

26

11a,11b

(C)

12a,12b

21

26

11a,11b

Fig. 5

Fig.6

Fig.7.

Fig.8

Fig.9

Fig.10

Fig.11

Fig.12

## INTERNATIONAL SEARCH REPORT

| | International application No. |
|---|---|
| | PCT/JP2007/067775 |

A. CLASSIFICATION OF SUBJECT MATTER
*H01M8/04*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/04, H01M8/10

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-353399 A (Espec Corp.), 22 December, 2005 (22.12.05), Claims; Par. No. [0017] (Family: none) | 1-11 |
| A | JP 11-354140 A (Toyota Central Research and Development Laboratories, Inc.), 24 December, 1999 (24.12.99), Claims (Family: none) | 1-11 |
| A | JP 2006-216441 A (Sumitomo Metal Industries, Ltd.), 17 August, 2006 (17.08.06), Claims (Family: none) | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 24 October, 2007 (24.10.07) | Date of mailing of the international search report 06 November, 2007 (06.11.07) |
|---|---|
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/067775 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-313365 A  (Mitsubishi Heavy Industries, Ltd.), 25 October, 2002 (25.10.02), Claims (Family: none) | 1-11 |

Form PCT/ISA/210 (continuation of second sheet) (April 2007)

## REFERENCES CITED IN THE DESCRIPTION

**Patent documents cited in the description**

- JP 8259710 A
- JP 2000215903 A
- JP 2005108777 A
- JP 2003068318 A
- JP 2003238678 A

**Non-patent literature cited in the description**

- IWANAMI RIKAGAKUJITEN. IWANAMI SHOTEN, 1998, vol. 5, 1149
- **K. D. Kreuer.** *Journal of Membrane Science,* 2001, vol. 185, 29-39